(19) Europäisches Patentamt
European Patent Office
Office européen des brevets

(11) **EP 2 377 684 A1**

(12) **EUROPÄISCHE PATENTANMELDUNG**

(43) Veröffentlichungstag:
**19.10.2011 Patentblatt 2011/42**

(51) Int Cl.:
***B32B 21/10*** *(2006.01)*     ***E04F 15/10*** *(2006.01)*

(21) Anmeldenummer: **11002801.6**

(22) Anmeldetag: **04.04.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **08.04.2010   DE 102010014187**

(71) Anmelder: **Johns Manville Europe GmbH
86399 Bobingen (DE)**

(72) Erfinder:
• **Ketzer, Michael
  97903 Collenberg (DE)**
• **Gleich, Klaus Friedrich
  80126 Highland Ranch (US)**

(74) Vertreter: **Luderschmidt, Schüler & Partner
Patentanwälte
John-F.-Kennedy-Strasse 4
65189 Wiesbaden (DE)**

(54) **Neue Verbundwerkstoffe, Verfahren zu deren Herstellung und deren Verwendung für den Fußbodenbereich**

(57)   Die Erfindung betrifft neue schalldämmende Verbundwerkstoffe, die sich insbesondere als Werkstoffe für den Fußbodenbereich und für den Innenausbau eignen.

Die erfindungsgemäßen Verbundwerkstoff umfassen neben geeigneten Trägermaterialien mindestens ein textiles Flächengebilde, wobei das textile Flächengebilde mittels eines B-Stage Binder endverfestigt ist und Hohlräume aufweist, die einem Porenvolumen im Bereich von mehr als 20% entsprechen.

**EP 2 377 684 A1**

**Beschreibung**

Die Erfindung betrifft neue schalldämmende Verbundwerkstoffe, die sich insbesondere als Werkstoffe für den Fußbodenbereich und für den Innenausbau eignen.

Verbundwerkstoffe ersetzen zunehmend traditionelle Baustoffe als Konstruktionswerkstoffe und müssen für mannigfaltige Anwendung angepasst werden. So ist einerseits eine ausreichende mechanische Stabilität gefordert und andererseits eine gute Verarbeitbarkeit und geringes Gewicht erforderlich. Es hat daher nicht an Versuchen gefehlt, bestehende Verbundwerkstoffe noch weiter zu verbessern.

So ist es bereits bekannt, Holzwerkstoffe, die aus zerkleinertem Holz und Einsatz von Bindern hergestellt werden, mit weiteren Werkstoffen zu kombinieren. Hierzu werden die beiden Werkstoffe üblicherweise laminiert und bilden einen Verbundwerkstoff. Durch Auswahl und Kombination der Werkstoffe können so die mechanischen Eigenschaften verbessert werden und zugleich eine Reduktion, beispielsweise des Gewichtes, erreicht werden.

Verbundwerkstoffe auf Basis von Holzwerkstoffen und Vliesen, die mittels eines "B-Stage" Binders verfestigt sind, sind beispielsweise aus WO2006/031522 bereits bekannt. Die zugrunde liegenden Vliese mit B-Stage Bindern sind beispielsweise aus US-A-5,837,620, US-A-6,303,207 und US-A-6,331,339 bereits grundsätzlich bekannt.

In der WO08/101678 werden Verbundwerkstoffe beschrieben, die eine mit einem B-Stage-Binder versehene textile Fläche beinhalten. Die beschriebenen Verbundwerkstoffe bieten jedoch keine besonderen geräuschdämpfenden Eigenschaften, die sie insbesondere für den Fußbodenbereich geeignet erscheinen lässt. Insbesondere im Fußbodenbereich bzw. bei Laminatfußböden sind neben den erwähnten mechanischen Eigenschaften jedoch auch eine gute Trittschalldämpfung und Geräuschdämmung erforderlich. Als Trittschall wird Schall bezeichnet, der durch die Bewegung von Menschen auf einem Fußboden entsteht und im anderen daneben, darunter oder darüber liegenden Raum durch Körperschallübertragung wahrgenommen wird. Davon zu unterscheiden ist der Gehschall.

Zur Trittschalldämmung wird üblicherweise ein Fußbodenaufbau mit Estrich gewählt, ergänzt durch dämpfende Faserplatten, Schaumstoffe oder Vliese.

Die Anforderungen an die Trittschalldämmung werden in Deutschland durch die DIN 4109 "Schallschutz im Hochbau" geregelt

Die im Markt erhältlichen Dämmlagen lösen das Problem der Geräuschdämmung zur Bodenunterlage in vielen Fällen zwar bereits recht gut, indem die Schallübertragung auf die Bodenunterlage gemindert wird. Die Trittschallausbreitung und Schallübertragung in den Raum ist jedoch nach wie vor äußerst unbefriedigend.

Insbesondere der Gehschall, d.h. der durch das Gehen einer Person auf dem Fußboden entstehende Schall der im selben Raum (gegebenenfalls störend) wahrgenommen werden kann ist von dem in der Bauakustik eingeführten Begriff des Trittschalls, der den in anderen Räumen wahrgenommenen Schall bezeichnet, zu unterscheiden. Der entstehende Gehschall ist in erster Linie von den Eigenschaften der Oberfläche des Fußbodens (hart, weich) und der Materialdämpfung des Fußbodens abhängig.

Durch die international stark gestiegene Verbreitung von harten Fußböden (z.B. Laminat) hat in jüngster Zeit die Belästigung durch Gehschall zugenommen. Das Vermögen, den Gehschall zu mindern bzw. weniger Gehschall zu erzeugen, ist ein wichtiges Merkmal für solche Böden geworden. Zu beachten ist dabei, dass viele handelsübliche trittschalldämmende Unterlagen keine mindernde sondern sogar verstärkende Wirkung auf den Gehschall haben.

Es bestand somit die Aufgabe, die bereits bekannten Produkte hinsichtlich ihrer anwendungstechnischen Eigenschaften, insbesondere der Trittschall- und Gehschalldämpfung und der Geräuschdämmung, sowie der Herstellprozesse zu optimieren.

Gelöst wird die vorstehend genannte, sowie weitere inhärent notwendige, Aufgaben durch einen verbesserten Verbundwerkstoff, dessen akustisches Dämpfungsverhalten verbessert ist.

Gegenstand der vorliegenden Erfindung ist ein Verbundwerkstoff mit verbesserten akustischem Dämpfungsverhalten, ein Verfahren zu dessen Herstellung, sowie dessen Anwendung und Gebrauch.

Der erfindungsgemäße Verbundwerkstoff umfasst

(i) mindestens ein Trägermaterial und
(ii) mindestens ein textiles Flächengebilde, wobei das textile Flächengebilde mindestens einen endverfestigten B-Stage Binder aufweist, dadurch gekennzeichnet, dass
(iii) das mit B-Stage Binder endverfestigte textile Flächengebilde Hohlräume aufweist, die einem Porenvolumen von mehr als 20% entsprechen.

Das im erfindungsgemäßen Verbundwerkstoff vorliegende textile Flächengebilde ist so aufgebaut, dass sich im fertigen Produkt Hohlräume mit einem bestimmten Porenvolumen vorhanden sind, die die Schallausbreitung bzw. die Schallfrequenz beeinflussen. Diese Hohlräume werden dadurch erzeugt, dass das textile Flächengebilde einen endverfestigten B-Stage-Binderanteil aufweist, der für eine porenfreie Aushärtung zu gering ist, so dass ein Porenvolumen, vorzugsweise ein freies Porenvolumen, verbleibt. Die hierbei eingesetzte Menge des endverfestigten B-Stage Binders beträgt üblicherweise bis zu 35 Gew.-%, bevorzugt zwischen 15 Gew.-% und 20 Gew.-%, (jeweils bezogen auf das vorverfestigte textile Flächengebilde ohne ggf. anwesende Funktionsmaterialien).

Das erfindungsgemäße Porenvolumen ist vorzugsweise ein freies Porenvolumen, d.h. die Poren sind mit Luft bzw. sonstigen Gasen gefüllt oder das erfindungsgemäße Porenvolumen kann auch durch Zugabe von akustisch wirksamen Füllstoffen, d.h. Füllstoffen die eine Schallabsorption bewirken. In diesem Fall ist der Anteil des B-Stage-Binders höher, bevorzugt zwischen 60 Gew.-% und 80 Gew.-%, und das Porenvolumen beträgt mehr als 20%. Es hat sich gezeigt, dass insbesondere beim Einsatz von akustisch wirksamen Füllstoffen, das textile Flächengebilde auch Papier umfassen kann.

Das erfindungsgemäße Porenvolumen kann mittels üblicher Porositätsmethoden bestimmt werden. Vorzugsweise wird das freie Porenvolumen mittels Quecksilber-Porosimetrie bestimmt. Diese Methode erlaubt die Bestimmung der Mesoporen und Makroporen. Als mikroporös werden Poren < 2 nm verstanden, mesoporös umfasst Porengröße zwischen 2 und 50 nm und makroporös umfasst Poren > 50 nm.

Eine geeignete Quecksilberporosimeter besteht beispielsweise aus einem Gerät Pascal 140/240 mit einem Druckbereich von 0,013 bis 0,4 MPa zur Bestimmung der Makroporen und Pascal 140/440 mit einem Druckbereich von 0,1 bis 400 MPa zur Bestimmung der Mesoporen (Fa. Thermo Electron Corporation, Mailand, Italien)

Die Porengrößenverteilung wird bestimmt durch Messung des Volumens an Quecksilber, das unter Druck in die Poren gelangt. Diese bilden das freie Porenvolumen. Da die Poren jedoch nicht genau zylindrisch sind, wie in der Gleichung angenommen, können die berechneten Porengrößen und -verteilungen von den realen Werten abweichen.

Insofern das erfindungsgemäße Porenvolumen durch Zugabe von akustisch wirksamen Füllstoffen gebildet wird, wird dieses durch die Zugabe der Menge an akustisch wirksamem Füllstoff bzw. Füllstoffen eingestellt.

Eine weitere Methode zur Bestimmung des erfindungsgemäßen Porenvolumens ist die mikroskopische Methode. Hierbei wird mittels optischer Methoden das Porenvolumen bestimmt.

Die spezifische Dichte (g/cm$^3$) des erfindungsgemäße Porenvolumens ist von der spezifischen Dichte des B-Stage Binders und den Fasern des textilen Flächengebildes unterschiedlich, so dass die Schallwellen Medien unterschiedlicher spezifischer Dichte durchlaufen, an deren jeweilige Grenzflächen eine Brechung und/oder Reflexion (ganz oder teilweise) stattfindet.

Bei den erfindungsgemäß eingesetzten akustischen wirksamen Füllstoffen handelt es sich um Materialien, die aufgrund ihrer Geometrie und Aufbau eine Reduzierung der Schallausbreitung ermöglichen und / oder die Schallfärbung, d. h. die Frequenzverteilung des abgestrahlten Schalles positiv beeinflussen. Insbesondere können hierfür Glashohlkugeln, Hohlfasern, Glaspartikel, Korkpartikel, poröse Füllstoffe, Partikel aus Elastomeren, Kork, Polystyrolpartikel, PU-Partikel und Schäume geeignet. Bevorzugt weisen die erfindungsgemäß eingesetzten akustisch wirksamen Füllstoffe eine Partikelgröße von ≤300μm auf, d.h. der D50 Wert oder auch Medianwert beträgt ≤300μm. Außerdem sind Treibmittel geeignet, die gasgefüllte Hohlräume im Bindermaterial bzw. in der textilen Fläche erzeugen oder bestehende Hohlräume vergrößern können.

Als poröse Füllstoffe werden solche natürlichen oder synthetischen Füllstoffe verstanden, die ein Porenvolumen von min. 10% aufweisen. Beispiele hierfür sind silikatische Materialen wie pyrogene Kieselsäure, naßgefällte Kieselsäure, Zeolithe usw.

Unter dem Begriff Elastomere werden polymere Werkstoffe verstanden, die ein gummi-elastisches Verhalten aufweisen, d.h. bei Raumtemeratur (20°C) wiederholt auf das zweifache ihrer Länge gedehnt werden können und nach Aufhebung der für die Dehnung erforderlichen Zwanges sofort wieder annähernd ihre Ausgangslänge einnehmen (gemäß Römpp "Chemielexikon"', 9. Auflage, "Elastomere", Seite 1105 -1107). Die dort genannten Elastomere umfassen auch Kautschuk-Materialien.

Insofern das erfindungsgemäße Porenvolumen durch Zugabe von akustisch wirksamen Füllstoffen gebildet wird, wird dieses durch die Zugabe der Menge an akustisch wirksamen Füllstoff/ Füllstoffen eingestellt.

Die spezifische Dichte (g/cm$^3$) des akustischen wirksamen Füllstoffs ist von der spezifischen Dichte des B-Stage Binders und den Fasern des textilen Flächengebildes unterschiedlich, so dass die Schallwellen Medien unterschiedlicher spezifischer Dichte durchlaufen, an deren jeweilige Grenzflächen eine Brechung und/oder Reflexion (ganz oder teilweise) stattfindet.

Das erfindungsgemäße textile Flächengebilde kann sich im Innern oder an mindestens einer der Oberflächen des Trägermaterials befinden. Das textile Flächengebilde kann auch während der Herstellung des Trägers in diesen eingebracht und verpresst werden. Es kann auch zwischen einzelnen Lagen des Trägermaterials eingebracht und verpresst oder als Bestandteil eines Laminates (z. B. HPL, CPL) auf den Träger aufgebracht werden. Aufgrund der inneren Struktur des erfindungsgemäßen textilen Flächengebildes ergeben sich besondere, insbesondere trittschalldämmende Eigenschaften des Verbundwerkstoffes.

Darüber hinaus kann das erfindungsgemäße textile Flächengebilde auch mehrschichtig aufgebaut sein, d.h. es können zwei oder mehr erfindungsgemäße textile Flächengebilde mit gleichem oder unterschiedlichem Porenvolumen kombiniert werden. Auch ist es möglich, dass das erfindungsgemäße textile Flächengebilde aus nur einer Schicht gebildet wird, wobei diese Schicht Bereiche mit jeweils unterschiedlichem Porenvolumen aufweist, sodass das Porenvolumen über die Dicke des textilen Flächengebildes auch einen Gradienten aufweisen kann. In einer bevorzugten Ausführungsform ist das Porenvolumen in den äußeren Bereichen des textilen Flächengebildes verglichen mit dem inneren Bereich des textilen Flächengebildes um mindestens 10% vorzugsweise um min. 15%, relativ zueinander gesehen, höher.

Des Weiteren kann der erfindungsgemäße Verbundwerkstoff noch eine oder mehrere zusätzliche Schichten aus einem Kork und/oder Korkwerkstoff aufweisen. Diese zusätzliche Korkschicht kann einschichtig und/oder ein mehrschichtiger, furnierter Kork sein. Die zusätzliche Korkschicht kann auch als Kork-Granulat (sogenannter Kork-Schrot) aufgebracht werden.

Die Dicke der jeweiligen zusätzlichen Korkschicht beträgt vorzugsweise zwischen 0,1mm und 3mm, besonders bevorzugt zwischen 0,2mm und 2 mm.

Die zusätzliche Korkschicht befindet sich üblicherweise zwischen dem Trägermaterial und dem textilen Flächengebilde umfassend einen endverfestigten B-Stage Binder und/oder auf der dem Trägermaterial abgewandten Seite des textilen Flächengebildes umfassend einen endverfestigten B-Stage Binder.

Beide Oberflächen der zusätzlichen Korkschicht, mindestens jedoch die dem Träger zugewandte Oberfläche der zusätzlichen Korkschicht ist mit einem B-stage Binder versehen, der sich während der Verpressung des Verbundwerkstoffes endverfestigt.

Die zusätzliche Korkschicht bewirkte eine zusätzliche natürliche Trittschall- und Wärmedämmung. Insbesondere Vibrationen/Schwingungen können damit besonders gut gedämpft werden.

Mittels der zusätzlichen Korkschicht kann eine Gewichts Reduktion des erfindungsgemäßen Verbundwerkstoffes, z.B. bei gleichbleibender Gesamtdicke, erreicht werden.

Die zusätzliche Korkschicht weist vorzugsweise eine Biegefestigkeit von 1,4 bis 2kg/cm auf.

Die zusätzliche Korkschicht weist vorzugsweise eine Dichte von 0,09 bis 0,2 g/cm$^3$ auf, insbesondere von 0,1 bis 0,15 g/cm$^3$, jeweils ohne Binder.

Die Biegefestigkeit und Dichte wird gemäß DIN 18161 bestimmt.

Der erfindungsgemäße Verbundwerkstoff eignet sich insbesondere für Fußbodenbeläge. Er kann auch für Raumelemente aller Art, wie z.B. Decken- und Wandelemente verwendet werden.

Der erfindungsgemäße Verbundwerkstoff zeichnet sich durch einen hohen Schallabsorptionsgrad $\alpha$ aus, der ein Maß für die absorbierte Schallintensität darstellt.

Der Schallabsorptionsgrad $\alpha$ ist ein Maß für die absorbierte Schallintensität.

Der Schallreflexionsgrad $\rho$ ist ein Maß für die reflektierte Schallintensität.

Der Schalltransmissionsgrad $\tau$ ist ein Maß für die durchgelassenen Schallintensität.

Der Schalldissipationsgrad $\delta$ ist ein Maß für die "verlorengegangene" Schallintensität.

Diese Zusammenhänge können wie folgt ausgedrückt werden:

$$\rho + \alpha = 1$$

$$\rho + \tau + \delta = 1$$

$$\alpha = \tau + \delta$$

Die erste Gleichung besagt, dass die Summe von reflektierter und absorbierter Schallintensität, also von Schallreflexion und Schallabsorption, stets der gesamten Schallintensität entspricht.

Die letzte Gleichung drückt aus, dass sich die absorbierte Schallintensität aus durchgelassener (transmittierter) und "verlorengegangener" (dissipierter) Schallintensität zusammensetzt. Eine Schallabsorption entsteht somit durch gleichzeitige Schalltransmission und Schalldissipation.

Bei dem gemäß (i) eingesetzten Trägern handelt es sich vorzugsweise um auf Holz basierende Materialien, wie z. B. Sperr- bzw. Lagenholz, Holzspanwerkstoff, insbesondere Spanplatten und OSB (Oriented Strand Boards), Holzfaserwerkstoff, insbesondere poröse Holzfaserplatten, diffusionsoffene Holzfaserplatten, harte (hochdichte) Holzfaserplatten (HDF) und mitteldichte Holzfaserplatten (MDF), und Arboform. Weiterhin sind auch Materialien, insbesondere Platten, aus Papier, Kork, Kartonagen, mineralischen Bestandteilen und/oder sogenannte Honeycombs möglich. Die Holzwerkstoffe sind üblicherweise platten- oder strangförmige Holzwerkstoffe, die durch Mischung der verschiedenen Holzpartikelformen mit natürlichen und/oder synthetischen Bindemittel im Zuge einer Heißverpressung hergestellt werden.

Die erfindungsgemäßen Träger umfassen außerdem Werkstoffe aus Holzfaserstoffen, Cellulosefasern, Naturfasern oder deren Mischungen und einem Binder, wobei der Anteil des Binders mehr als 15Gew% beträgt. Die Werkstoffe sind gegebenenfalls durch Glas-, Basalt- oder synthetischen Fasern verstärkt

Bei den Papieren handelt es sich vorzugsweise um Papiere auf Basis von natürlichen, synthetischen, mineralischen oder keramischen Fasern oder auch von Mischungen dieser Fasertypen.

Bei den Kartonagen handelt es sich vorzugsweise um Kartonagen auf Basis von natürlichen und/oder synthetischen Fasern, wobei diese auch mineralische und/oder keramische Fasern umfassen sowie Mischungen aus diesen Fasertypen.

Bei den mineralischen Platten handelt es sich vorzugsweise um handelsübliche Mineralkartonplatten mit beidseitigem Kartonagebezug, um Gipsfaserplatten, Keramikfaserplatten, Zement- oder Kalkplatten. Die Platten können gegebenenfalls mit natürlichen und/oder synthetischen Fasern verstärkt sein, wobei diese auch mineralische und/oder keramische Fasern umfassen können. Die Verstärkungsfasern können in Form von Filamenten, Monofilen oder als Stapelfasern vorliegen.

Neben den beschriebenen Materialien kann der Träger auch aus Kork oder anderen pflanzlichen Materialien bestehen.

Das Flächengewicht der im Verbundstoff enthaltenen Träger ist von der Endanwendung abhängig und unterliegt keiner besonderen Einschränkung.

Weitere Detail zu den geeigneten Trägermaterialien und Träger sind ausführlich in der WO08/101678 beschrieben, auf die hiermit verwiesen wird und deren Offenbarung hinsichtlich der Trägermaterialien und Träger auch Bestandteil dieser Anmeldung ist.

Bei den gemäß (ii) eingesetzten textilen Flächengebilden handelt es sich um alle Gebilde, die aus Fasern hergestellt werden und aus denen mittels einer flächenbildenden Technik eine textile Fläche hergestellt worden ist.

Die mit dem B-Stage Binder zu versehenden textilen Flächengebilde können grundsätzlich auch ohne Binder, insbesondere chemische Binder, eingesetzt werden.

Um jedoch die erforderlichen Festigkeiten bei der Weiterverarbeitung der Flächengebilde zu gewährleisten, können auch Binder eingebracht und / oder bekannte mechanische Verfestigungsmethoden, vorzugsweise Vernadelungsmethoden, Verwendung finden. Neben der Möglichkeit einer mechanischen Verfestigung, z.B. durch Kalandrierung oder Vernadelung, sei hier insbesondere auch die hydrodynamische Vernadelung erwähnt. Als Binder sind chemische und/oder thermoplastische Binder geeignet.

Bevorzugt werden die mit dem B-Stage Binder zu versehenden textilen Flächengebilde jedoch mit einem chemischen Binder vorverfestigt. Die eingesetzten Binder können gleich oder verschieden sein, müssen jedoch aus der Gruppe der zum B-stage Binder kompatiblen Bindersysteme ausgewählt werden. Der zusätzliche Binderanteil beträgt maximal 25 Gew.-%, vorzugsweise 10 Gew.-% oder weniger; der Mindestgehalt beträgt 0,5 Gew.-%, bevorzugt min. 1 Gew.-%.

Bevorzugt ist das textile Flächengebilde ein Nonwoven und besteht vorzugsweise aus Naturfasern und/oder Fasern aus synthetisierten oder natürlichen Polymeren, keramische Fasern, Mineralfasern oder Glasfasern, wobei diese auch in Form von Gemischen verwendet werden können. Besonders bevorzugt besteht das Nonwoven aus Glasfasern, Mineralfasern, Polyesterfasern oder Cellulosefasern. Der Begriff textiles Flächengebilde umfasst auch Papiere.

Bei den textilen Flächen aus Mineral- und keramischen Fasern handelt es sich um Alumosilikat-, Keramik-, Dolomit- Wollastonitfasern oder aus Fasern von Vulkaniten, vorzugsweise Basalt-, Diabas- und/oder Melaphyrfasern, insbesondere Basaltfasern. Diabase und Melaphyre werden zusammengefasst als Paläobasalte bezeichnet und Diabas wird auch gerne als Grünstein bezeichnet.

Das Mineralfaservlies kann aus Filamenten, d.h. unendlich langen Fasern oder aus Stapelfasern gebildet werden. Die durchschnittliche Länge der Stapelfasern im erfindungsgemäß eingesetzten Vlies aus Mineralfasern beträgt zwischen 5 und 120 mm, vorzugsweise 10 bis 90 mm. In einer weiteren Ausführungsform der Erfindung enthält das Mineralfaservlies eine Mischung aus Endlosfasern und Stapelfasern.

Der durchschnittliche Faserdurchmesser der Mineralfasern beträgt zwischen 5 und 30 $\mu$m, vorzugsweise zwischen 8 und 24 $\mu$m, besonders bevorzugt zwischen 8 und 15$\mu$.

Das Flächengewicht des textilen Flächengebildes aus Mineralfasern beträgt zwischen 15 und 500 g/m$^2$, vorzugsweise 40 und 250 g/m$^2$, wobei sich diesen Angaben auf ein Flächengebilde ohne Binder beziehen.

Bei den textilen Flächen aus Glasfasern sind insbesondere Vliese bevorzugt. Diese werden aus Filamenten, d.h. unendlich langen Fasern oder aus Stapelfasern aufgebaut. Die durchschnittliche Länge der Stapelfasern beträgt zwischen 5 und 120 mm, vorzugsweise 10 bis 90 mm. In einer weiteren Ausführungsform der Erfindung enthält das Glasfaservlies eine Mischung aus Endlosfasern und Stapelfasern.

Der durchschnittliche Durchmesser der Glasfasern beträgt zwischen 5 und 30 $\mu$m, vorzugsweise zwischen 8 und 24 $\mu$m, besonders bevorzugt zwischen 10 und 21 $\mu$m.

Neben den vorstehend genannten Durchmessern können auch so genannte GlasMikrofasern Verwendung finden. Der bevorzugte durchschnittliche Durchmesser der Glasmikrofasern ist hierbei zwischen 0,1 und 5 $\mu$m. Die die textile Fläche bildenden Mikrofasern können auch in Mischungen mit anderen Fasern, vorzugsweise Glasfasern vorliegen. Außerdem ist auch ein schichtförmiger Aufbau aus Mikrofasern und Glasfasern möglich.

Das Flächengewicht des textilen Flächengebildes aus Glasfasern beträgt zwischen 15 und 500 g/m$^2$, vorzugsweise 40 und 250 g/m$^2$, wobei sich diesen Angaben auf ein Flächengebilde ohne Binder beziehen.

Geeignete Glasfasern umfassen jene, die aus A-Glas, E-Glas, S-Glas, C-Glas, T-Glas oder R-Glas hergestellt wurden.

Von den textilen Flächen aus Fasern aus synthetischen Polymeren sind Vliese, insbesondere sogenannte Spunbonds, d.h. Spinnvliese die durch eine Wirrablage schmelzgesponnener Filamente erzeugt werden, bevorzugt.

Bevorzugt bestehen die Spinnvliese aus schmelzspinnbaren Polyestern. Als Polyestermaterial kommen im Prinzip alle zur Faserherstellung geeigneten bekannten Typen in Betracht. Besonders bevorzugt sind Polyester wie Polyethylenterephthalat (PET).

Die Einzeltiter der Polyesterfilamente im Spinnvlies betragen zwischen 1 und 16 dtex, vorzugsweise 2 bis 10 dtex.

Neben Endlosfilamenten (Spunbondverfahren) kann die textile Flächen auch aus Stapelfasern oder Gemischen aus Stapelfasern und Endlosfilamenten aufgebaut sein. Die Einzeltiter der Stapelfasern im Vlies betragen zwischen 1 und 16 dtex, vorzugsweise 2 bis 10 dtex. Die Stapellänge beträgt 1 bis 100mm, vorzugsweise 2 bis 50mm, besonders bevorzugt 2 bis 30mm. Das textile Flächengebilde kann auch aus Fasern unterschiedlicher Materialien aufgebaut sein, um besondere Eigenschaften erzielen zu können.

Das Flächengewicht des textilen Flächengebildes aus Fasern aus synthetischen Polymeren beträgt zwischen 10 und 500 g/m², vorzugsweise 20 und 250 g/m²

Bei den textilen Flächen aus Cellulosefasern sind insbesondere Vliese bevorzugt. Diese werden aus Filamenten, d.h. unendlich langen Fasern und/oder aus Stapelfasern aufgebaut. Die durchschnittliche Länge der Stapelfasern beträgt zwischen 1 und 25 mm, vorzugsweise 2 bis 5 mm.

Der durchschnittliche Durchmesser der Cellulosefasern beträgt zwischen 5 und 50 $\mu$m, vorzugsweise zwischen 15 und 30 $\mu$m.

Weitere Details zu den geeigneten Materialien für die textilen Flächengebilde sind ausführlich in der WO08/101678 beschrieben, auf die hiermit verwiesen wird und deren Offenbarung hinsichtlich der textilen Flächengebilde auch Bestandteil dieser Anmeldung ist.

Das gemäß (ii) eingesetzte textile Flächengebilde weist mindestens einen Binder im B-Stage-Zustand auf.

Als B-Stage-Binder im "B-Stage Zustand" werden Binder verstanden, die nur teilweise verfestigt bzw. gehärtet sind, und die noch eine Endverfestigung, beispielsweise durch thermische Nachbehandlung erfahren können. Derartige B-Stage-Binder sind z. B. in der US-A-5,837,620, US-A-6,303,207 und US-A-6,331,339 sowie in der WO08/101678 eingehend beschrieben. Die dort offenbarten B-Stage-Binder sind auch Gegenstand der vorliegenden Beschreibung.

Bei B-Stage-Bindern handelt es sich vorzugsweise um Binder auf Basis von Furfurylalkohol-Formaldehyd, Phenol-Formaldehyd, Melamin-Formaldehyd, Harnstoff-Formaldehyd und deren Gemische. Vorzugsweise handelt es sich um wässrige Systeme. Weitere bevorzugte Bindersysteme sind formaldehydfreie Binder. B-Stage-Binder zeichnen sich dadurch aus, dass sie einer mehrstufigen Härtung unterworfen werden können, d. h. nach der ersten Härtung bzw. den ersten Härtungen noch eine ausreichende Binderwirkung aufweisen, um diese für die weitere Verarbeitung nutzen zu können.

Zum Erreichen des B-Stages wird das mit dem Binder imprägnierte textile Flächengebilde unter Temperatureinfluss getrocknet, ohne eine Komplettaushärtung zu erzeugen. Die erforderlichen Prozessparameter sind vom gewählten Bindersystem abhängig.

Üblicherweise werden derartige Binder nach Zusatz eines Katalysators bei Temperaturen von ca. 350F in einem Schritt gehärtet.

Zur Bildung des B-Stages werden derartige Binder, ggf. nach Zusatz eines Katalysators gehärtet. Der Härtungs-Katalysator-Anteil beträgt bis zu 10 Gew.-%, vorzugsweise 1 bis 10 Gew.-% (bezogen auf den Gesamtbindergehalt). Als Härtungs-Katalysator sind beispielsweise Ammoniumnitrat, sowie organische, aromatische Säuren, z.B. Maleinsäure und p-Toluolsulfonsäure geeignet, da dieser den B-Stage Zustand schneller erreichen lässt. Neben Ammoniumnitrat, Maleinsäure und p-Toluolsulfonsäure sind alle Materialien als Härtungs-Katalysator geeignet, welche eine vergleichbare saure Funktion aufweisen. Zum Erreichen des B-Stages wird die mit dem Binder imprägnierte textile Flächengebilde unter Temperatureinfluß getrocknet, ohne eine Komplettaushärtung zu erzeugen. Die erforderlichen Prozessparameter sind vom gewählten Bindersystem abhängig.

Die untere Temperaturgrenze kann durch Wahl der Dauer bzw. durch Zusatz von größeren oder stärker sauren Härtungs-Katalysator beeinflusst werden.

Das Aufbringen des B-Stage-Binders, auf das in (ii) bezeichnete textile Flächengebilde kann mit Hilfe aller bekannten Methoden erfolgen. Wie in der WO08/101678 beschrieben, kann der Binder neben Aufsprühen, Durchtränken und Einpressen auch mittels Beschichten oder Schaumauftrag aufgebracht werden.

Das gemäß (ii) eingesetzte textile Flächengebilde kann gegebenenfalls noch Funktionsmaterialien aufweisen. Das optional eingesetzte Funktionsmaterial kann gleichzeitig mit dem B-Stage-Binder, z. B. als Gemisch oder als Einzelkomponenten oder vor bzw. nach dem Binderauftrag aufgebracht werden. Insofern der B-Stage-Binder per Schaumauftrag aufgebracht wird, ist es von Vorteil das Funktionsmaterial mit dem Schaum bzw. im Schaum verteilt aufzubringen oder das Funktionsmaterial auf den noch frischen Schaum aufzubringen.

Der erforderliche Anteil des B-Stage-Binders in dem textilen Flächengebilde ist abhängig vom freien Porenvolumen der eingesetzten textilen Fläche. Die aufgebrachte Menge an B-Stage Binder wird so gewählt, dass das vorhandene freie Porenvolumen nicht vollständig mit Binder gefüllt wird. Es hat sich gezeigt, dass bei einem B-Stage-Binderanteil von weniger als 35 Gew.-% eine deutlich verbesserte akustische Dämpfung eintritt, da ein ausreichend freies Porenvolumen verbleibt.

Besonders bevorzugt für die erfindungsgemäße Anwendung ist ein B-Stage-Binderanteil von 15 - 20 Gew.-%, wobei sich die Gew.-% Werte sich auf das Gesamtgewicht des ggf. vorverfestigten textilen Flächengebildes ohne Funktionsmaterialien beziehen. Wesentlich an der vorliegenden Erfindung ist, dass auf Grund des niedrigen B-Stage-Binderanteils im textilen Flächengebilde von weniger als 35 Gew.-% ein poriges, mit einer Vielzahl von Hohlräumen versehenes Material erzeugt wird, das einen außerordentlich positiven Einfluss auf die Schalldämpfung im Laminat und auf die "Klangfarbe" des abgestrahlten Schalles ergibt.

Das Porenvolumen im textilen Flächengebilde kann auch durch Zugabe bestimmter, akustisch wirksamer Füllstoffe, d.h. Füllstoffen die eine Schallabsorption bewirken, erreicht werden. In diesem Fall kann der Anteil des B-Stage-Binders höher gewählt werden und liegt bevorzugt zwischen 60 Gew% und 80 Gew%.

Die Begriffe "akustisch wirksamer Füllstoff" und "akustisch wirksames Additiv", sofern sie in dieser Beschreibung vorkommen, werden synonym verwendet.

Eine weitere Möglichkeit, das Porenvolumen, insbesondere das freie Porenvolumen, zu erhöhen, ist die zusätzliche Zugabe von Hohlfasern in das textile Flächengebilde. Die Hohlfasern können dabei aus Glas, mineralischen und/oder synthetischen Materialien, insbesondere synthetischen, organischen Polymeren, aufgebaut sein.

Bei dem gemäß (ii) eingesetzten textilen Flächengebilde kann optional ein Funktionsmaterial anwesend sein. Hierbei handelt es sich vorzugsweise um Flammschutzmittel und um Materialien zur Abschirmung von elektromagnetischen Strahlen.

Die Funktionsmaterialien werden in den B-Stage-Binder eingebunden. In einer Variante des Verfahrens wird ein zusätzlicher Binder zur Fixierung der Funktionsmaterialien auf dem textilen Flächengebilde zugesetzt. Hierbei wird vorzugsweise der gleiche Binder (B-Stage-Binder), wie er im textilen Flächengebilde vorliegt, gewählt. Der Gehalt bzw. Anteil an Funktionsmaterial wird durch die nachfolgende Verwendung bestimmt.

Bei den Flammschutzmitteln handelt es sich anorganische Flammschutzmittel, Organophosphor-Flammschutzmittel, Stickstoff basierte Flammschutzmittel oder Intumeszenz-Flammschutzmittel. Halogenierte (bromierte und chlorierte) Flammschutzmittel sind ebenfalls einsetzbar, aufgrund ihrer Risikobewertung jedoch weniger bevorzugt. Beispiele für derartige halogenierte Flammschutzmittel sind polybromierte Diphenyläther, z.B. DecaBDE, Tetrabrombisphenol A und HBCD (Hexabromocyclododecan).

Bei den Stickstoff basierten Flammschutzmitteln handelt es sich um Melamine und Harnstoffe.

Bei den Organophosphor-Flammschutzmitteln handelt es sich typischerweise um aromatische und Alkyl-Ester der Phosphorsäure. Bevorzugt werden TCEP (Trischloroethylphosphat), TCPP (Trischloropropylphosphat), TDCPP (Trisdichloroisopropylphosphat), Triphenylphosphat, Trioktylphosphat (Tris-(2-ethylhexyl)phosphat) eingesetzt.

Bei den anorganischen Flammschutzmitteln handelt es sich typischerweise um Hydroxide, wie Aluminiumhydroxid und Magnesiumhydroxid, Borate, wie Zinkborat, Ammoniumverbindungen, wie Ammoniumsulfat, Roten Phosphor, Antimonoxide, wie Antimontrioxid und Antimonpentoxid und/oder Schichtsilikate, wie Vermiculite.

Bei den Materialien zur Abschirmung von elektromagnetischen Strahlen handelt es sich üblicherweise um elektrisch leitfähige Materialien. Geeignete Materialien sind elektrisch leitfähige Kohlenstoffe wie Ruß, Graphit und Kohlenstoff-Nano-Röhrchen (C-Nanotubes), leitfähige Kunststoffe oder Fasern aus Metall oder Metallbestandteilen. Diese können in Form von Folien, Partikeln, Fasern bzw. Drähten, und/oder textilen Flächengebilden aus den vorstehend genannten Materialien aufgebaut sein.

Das Aufbringen des Funktionsmaterials erfolgt in Abhängigkeit von der Beschaffenheit des jeweiligen Funktionsmaterials mittels bekannter Techniken. Auch hier kann der Auftrag mittels Rotationsdüsenköpfen erfolgen.

Bevorzugt werden die Funktionsmaterialien bzw. das ggf. eingesetzte akustisch wirksame Füllmaterial zusammen mit dem B-Stage-Binder in das textile Flächengebilde eingebracht. Bevorzugt werden die Funktionsmaterialien bzw. das akustisch wirksame Füllmaterial mit dem B-Stage-Binder vermischt und gemeinsam in das textile Flächengebilde eingebracht bzw. auf das textile Flächengebilde aufgebracht.

Die Funktionsmaterialien können auch auf das textile Flächengebilde aufgebracht werden. Beispielsweise können die Funktionsmaterialien zwischen 2 Trockenstrecken einer Imprägnieranlage auf das textile Flächengebilde aufgebracht werden.

Zur Ausbildung eines Porenvolumen-Gradienten wird das akustisch wirksame Füllmaterial zusammen mit dem B-Stage-Binder in verschiedenen Mischungsverhältnissen gemischt und anschließend mittels mehrfach Coating aufgebracht. Zwischen den eizelnen Coating-Schritten kann das Gemisch aus akustisch wirksamem Füllmaterial und B-Stage-Binder mittels Rollen bzw. Rollenpaaren in das textile Flächengebilde eingebracht werden. Soll der Gradient ein freies Porenvolumen sein, wird die Auftragsmenge an B-Stage Binder pro Coating variiert oder die Konzentration bzw. der Feststoffgehalt des B-Stage Binders angepasst.

Insofern das erfindungsgemäße Porenvolumen durch Zugabe von akustisch wirksamen Füllstoffen gebildet wird, wird das Porenvolumen durch die Zugabe der Menge an akustisch wirksamen Füllstoff eingestellt.

Die spezifische Dichte (g/cm$^3$) des akustischen Füllmaterials ist von der spezifischen Dichte des B-Stage Binders und den Fasern des textilen Flächengebildes unterschiedlich, so dass die Schallwellen Medien unterschiedlicher spezifischer Dichte durchlaufen, an deren jeweilige Grenzflächen eine Brechung und/oder Reflexion (ganz oder teilweise) stattfindet.

Insofern eine zusätzliche Korkschicht vorhanden ist, ist es von Vorteil wenn die spezifische Dichte (g/cm$^3$) des akustischen Füllmaterials, des B-Stage Binders, der Fasern des textilen Flächengebildes und des Korkmaterials unterschiedlich ist.

Insofern das textile Flächengebilde eine zusätzliche Dekorschicht aufweist, wie z.B. ein Dekorpapier oder ein bedrucktes Nonwoven, insbesondere jedoch eine mittels Direkt- oder Digitaldruck direkt erzeugte Dekorschicht, aufweist, kann als Funktionsmaterial auch ein üblicher Deck und/oder Klarlack aufgebracht werden. Derartige Dekorschichten, die durch Direkt- oder Digitaldruck auf mittels B-Stage Binder verfestigten textilen Flächengebilden erzeugt wurden, sind z.B. aus WO2008/101679A2 bekannt. In diesem Fall wird nicht nur ein Verbundwerkstoff mit verbessertem akustischem Dämpfungsverhalten bereitgestellt, sonder vielmehr ein dekorativer Verbundwerkstoff, z.B. ein Laminat für Fußböden, bereitgestellt welches in einfacher Weise gefertigt werden kann und sehr gute Dämpfungseigenschaften aufweist. Bei dieser Ausführungsform wird die nachfolgend beschriebene ggf. vorhandene zusätzliche Elastomerschicht dann allerdings vorteilhafterweise zwischen Trägermaterial und textilen Flächengebilde eingebaut.

Der erfindungsgemäße Verbundwerkstoff kann zusätzlich noch eine oder mehrere Elastomerschichten, vorzugsweise mindestens eine thermoplastische Elastomerschicht aufweisen. Die Dicke der Elastomerschicht wird als Auftragsmenge ausgedrückt, wobei diese vorzugsweise min 10g/m$^2$ Elastomer entspricht.

Diese zusätzliche Elastomerschicht wird üblicherweise zwischen dem Trägermaterial und dem textilen Flächengebilde umfassend einen endverfestigten B-Stage Binder eingebaut und/oder auf die dem Trägermaterial abgewandte Seite des textilen Flächengebildes umfassend einen endverfestigten B-Stage Binder aufgebracht. In einer weiteren Ausführungsform der Erfindung kann die Elastomerschicht zusätzlich als Schutzschicht fungieren. Hierbei kann die Elastomerschicht mittels Direkt- oder Digitaldruck direkt bedruckt sein.

Unter dem Begriff Elastomere werden polymere Werkstoffe verstanden, die ein gummi-elastisches Verhalten aufweisen, d.h. bei Raumtemeratur (20°C) wiederholt auf das zweifache ihrer Länge gedehnt werden können und nach Aufhebung der für die Dehnung erforderlichen Zwanges sofort wieder annähernd ihre Ausgangslänge einnehmen (gemäß Römpp "Chemielexikon"', 9. Auflage, "Elastomere", Seite 1105 -1107). Die dort genannten Elastomere umfassen auch Kautschuk-Materialien.

Als Untergruppe der Elastomere werden thermoplastische Elastomere verstanden, die üblicherweise in folgende Gruppen eingeteilt werden (Bezeichnungen nach ISO 18064):

● TPO = Thermoplastische Elastomere auf Olefinbasis, vorwiegend PP/EPDM, z. B. Santoprene (AES/Monsanto)
● TPV = Vernetzte thermoplastische Elastomere auf Olefinbasis, vorwiegend PP/EPDM, z. B. Sarlink (DSM), Forprene(SoFter)
● TPU = Thermoplastische Elastomere auf Urethanbasis, z. B. Desmopan, Texin, Utechllan (Bayer)
● TPC = Thermoplastische Copolyester, z. B. Hytrel (DuPont)
● TPS = Styrol-Blockcopolymere (SBS, SEBS, SEPS, SEEPS und MBS), z. B. Septon (Kuraray) oder Thermoplast K (Kraiburg TPE)
● TPA = Thermoplastische Copolyamide, z. B. PEBAX (Arkema)

Geeignete Elastomere sind insbesondere ACM, AU, BIIR, BR, CIIR, CM, CO, CR, CSM, EAM, ECO, EPDM-S, EP(D)M-P, EU, EVM, FKM, FVMQ, H-NBR, IIR, MVQ, NBR, NR(IR), OT, PNF, SBR, X-NBR (wie in Römpp "Chemielexikon"', 9. Auflage, "Elastomere", Seite 1106 -1107 definiert).

Ein weiterer Gegenstand der Erfindung ist ein Verfahren zur Herstellung eines Verbundwerkstoffes mit verbessertem akustischem Dämpfungsverhalten. Dieser Verbundwerkstoff besteht - wie vorstehend ausgeführt - aus einem Träger und mindestens einem textilen Flächengebilde, das einen endverfestigten B-Stage-Binder enthält und ein Porenvolumen von mehr als 20% aufweist.

Das textile Flächengebilde kann dabei bereits während der Herstellung des Trägers in diesen eingebracht werden oder erst nach Fertigstellung des Trägermaterials auf diesen aufgebracht oder - bei mehrlagigen Systemen - zwischen die einzelnen Trägerlagen eingebracht werden. Dabei kann das textile Flächengebilde noch zusätzliche Funktionsmaterialien enthalten.

Gegenstand der vorliegenden Erfindung ist ebenfalls ein Verfahren zur Herstellung des erfindungsgemäßen Verbundwerkstoffes umfassend die Maßnahmen:

a) Zuführen von Trägermaterial,
b) Zuführen mindestens eines textilen Flächengebildes, wobei das textile Flächengebilde mindestens einen Binder im B-Stage-Zustand aufweist und welches optional mindestens ein Funktionsmaterial aufweist,
c) Laminieren des gemäß Schritt a) und b) erhaltenen Aufbaus unter Einwirkung von Druck und Wärme, sodass der im B-Stage-Zustand vorliegende Binder in dem textilen Flächengebilde endverfestigt wird,
d) ggf. Aufbringen weiterer Schichten auf das Laminat und ggf. Trocknung,

dadurch gekennzeichnet, dass das in b) zugeführte textile Flächengebilde ein Porenvolumen von mehr als 20% aufweist, die Laminierung in (c) so durchgeführt wird, dass das mit B-Stage Binder endverfestigte textile Flächengebilde im resultierenden Verbundwerkstoff ein Porenvolumen im Bereich von mehr als 20% aufweist.

Insofern keine akustisch wirksamen Füllstoffe zugesetzt werden, beträgt die Menge an B-Stage Binder in b) maximal 35 Gew-%, vorzugsweise 15 Gew% bis 20 Gew%, (jeweils bezogen auf das vorverfestigte textile Flächengebilde ohne Funktionsmaterialien).

Insofern akustisch wirksame Füllstoffe zugesetzt werden beträgt die Menge an B-Stage Binder in b) mehr als 35 Gew.-%, bevorzugt 60 Gew.-% bis 80 Gew.-

% (jeweils bezogen auf das vorverfestigte textile Flächengebilde ohne Funktionsmaterialien).

Das textile Flächengebilde kann sich dabei vollständig im Innern des Trägermaterials befinden. Alternativ ist jedoch auch eine asymmetrische Anordnung möglich und für viele Anwendungen sinnvoll. In diesem Fall befindet sich das textile Flächengebilde am Rande oder vollständig an der Oberfläche des zu bildenden Trägers. Gleiches gilt bei Verwendung mehrerer textilen Flächengebilde, die an unterschiedlichen Stellen im Träger oder auf einer oder beiden Oberflächen des Trägers angeordnet sein können. Die optional im Schritt d) zusätzlich aufgebrachten Schichten sind z. B. Dekorpapiere und Overlaypapiere, die direkt auf das akustisch wirksame Flächengebilde auflaminiert werden.

Das textile Flächengebilde kann auch auf dem fertigen Träger aufgebracht werden oder zwischen mehreren fertigen Trägern eingebracht werden. Selbstverständlich können auch mehrere textile Flächengebilde auf die Oberflächen des Trägers oder zwischen die Träger eingebracht werden. Die optional im Schritt d) zusätzlich aufgebrachten Schichten sind z. B. Dekorpapiere und Overlaypapiere, die direkt auf das akustisch wirksame Flächengebilde auflaminiert werden.

Falls mehrere Träger zu einem Laminat verpresst werden, kann das textile Flächengebilde bzw. die textilen Flächengebilde zwischen den Trägern angeordnet werden, an einer oder an beiden äußeren Oberflächen des Laminates angebracht sein oder sowohl zwischen den Trägern als auch an einer oder beiden äußeren Oberflächen des Laminates angebracht sein.

In einer Variante kann das Aufbringen eines textilen Flächengebildes gemäß Schritt b) auch während der Herstellung des Trägers erfolgen. Mit anderen Worten, anstelle des fertigen Trägers in Schritt a) wird in Schritt a) der Träger erst gebildet.

Insofern der erfindungsgemäße Verbundwerkstoff noch eine zusätzliche Korkschicht aufweisen soll, wird diese - je nach gewünschter Anordnung - auf das Trägermaterial vor Schritt b) aufgebracht.

Die Korkschicht wird bevorzugt auf beiden Oberflächen mit einem B-Stage Binder versehen, zumindest jedoch auf der dem Träger zugewandten Oberfläche. Der Binderauftrag kann durch alle bekannten Methoden erfolgen, insbesondere durch Eintauchen der Korkschicht in ein Binderbad oder durch Standard-Beschichtungsverfahren. Der Binderauftrag erfolgt üblicherweise in einem gesonderten Offline-Prozess. Die dem Träger zugewandte Oberfläche der Korkschicht wird vorzugsweise mit 10g/m$^2$ bis 50g/m$^2$ Binder beaufschlagt, während die dem Träger abgewandte Oberfläche 0g/m$^2$ bis 20g/m$^2$ beträgt.

Insofern der erfindungsgemäße Verbundwerkstoff noch eine oder mehrere zusätzliche Elastomerschichten aufweisen soll, werden diese - je nach gewünschter Anordnung - auf das Trägermaterial nach Schritt a) bzw. vor Schritt b) aufgebracht und/oder vor bzw. nach der Laminierung in Schritt c)

Die Bildung einer zusätzlichen Elastomerschicht erfolgt üblicherweise durch Aufbringung als Hot-Melt und/oder durch Rackeln. Die Bildung in nach Schritt a) kann auch direkt auf dem Trägermaterial erfolgen. Alternativ kann die Elastomerschicht auch auf dem in Schritt b) zugeführten textilen Flächengebilde bereits vorliegen.

Die Laminierung des gemäß der Schritte a) und b) erhaltenen Aufbaus in Schritt c) erfolgt unter Einwirkung von Druck und Wärme, in einer solchen Weise, dass der im B-Stage-Zustand vorhandene Binder endverfestigt wird und gleichzeitig das vorhandene Porenvolumen auf einen Wert von mehr als 20% eingestellt wird.

Die Laminierung kann mittels dis-kontinuierlichem oder kontinuierlichem Pressen oder durch Walzen erfolgen. Die Verfahren sind dem Fachmann bekannt und unterliegen keinerlei Einschränkungen. Es ist lediglich sicherzustellen, dass der verwendete B-Stage-Binder vollständig verfestigt wird und das Porenvolumen auf den zuvor beschriebenen Wert eingestellt wird.

Wie bereits erwähnt wird das textile Flächengebilde gemäß Schritt b) vorzugsweise im Innern des Trägermaterials eingebracht, wobei die optimale Lage des textilen Flächengebildes im Trägermaterial von den geplanten Anwendungen abhängig ist. Vorzugsweise befindet sich das textile Flächengebilde jedoch in der Mitte des zu bildenden Trägers.

In einer weiteren bevorzugten Ausführung der Erfindung befindet sich das textile Flächengebilde im Träger in der Nähe einer der Oberflächen des Trägers. In einer weiteren alternativen Anordnung kann das textile Flächengebilde auch vollständig außerhalb des Trägers an dessen Oberfläche angebracht sein.

In einer weiteren bevorzugten Ausführung der Erfindung befinden sich mindestens zwei textile Flächengebilde im Träger. Dabei können die textilen Flächengebilde je nach Anwendung auch unsymmetrisch zur Trägermitte angeordnet sein, d. h., beispielsweise kann ein textiles Flächengebilde in der Nähe der Trägermitte und ein anderes an eine der Trägeroberflächen angeordnet sein. Auch eine Kombination von auf die Oberfläche aufgebrachten textilen Flächengebilden und in den Träger eingebrachten textilen Flächengebilden ist möglich. Die möglichen Anordnungen unterliegen grundsätzlich keiner Beschränkung.

Das optionale Aufbringen weiterer Schichten gemäß Schritt d) sind dem Fachmann bekannte Möglichkeiten. Beispiele hierzu sind das Aufbringen von dekorativen Laminaten, z. B. CPL oder HPL, Dekorschichten, Papiere, Lack-und Schutzschichten, etc. Diese Zusatzschichten, deren Aufbringen und Bearbeitung bzw. Verarbeitung unterliegen ebenfalls keinen Einschränkungen und sind dem Fachmann bekannt. Selbstverständlich können diese Zusatzschichten ihrerseits ein mit einem B-Stage-Binder versehenes textiles Flächengebilde enthalten.

Neben dem vorstehend beschriebenen Verfahren sind auch die mit diesem Verfahren hergestellten Verbundwerkstoffe als solche aus dem Stand der Technik nicht bekannt.

Weiterer Gegenstand der vorliegenden Erfindung ist somit ein Verbundwerkstoff umfassend:

(i) mindestens ein Trägermaterial und

(ii) mindestens ein in den Träger eingebrachtes und/ oder auf den Träger aufgebrachtes textiles Flächengebilde ein textiles Flächengebilde, wobei das bzw. die textile(n) Flächengebilde mindestens einen endverfestigten B-Stage Binder aufweist,

(iii) optional mindestens ein auf die Oberseite des mit dem B-Stage-Binder ausgerüsteten textilen Flächengebildes aufgebrachtes oder in das textile Flächengebilde eingebrachtes Funktionsmaterial,

(iv) gegebenenfalls weitere Schichten,

dadurch gekennzeichnet, dass

(v) das mit B-Stage Binder endverfestigte textile Flächengebilde Hohlräume aufweist, die einem Porenvolumen im Bereich von mehr als 20% entsprechen.

Auch dieser Verbundwerkstoff kann zwischen Trägermaterial und textilem Flächengebilde mit endverfestigtem B-Stage Binder eine oder mehrere Korkschichten, wie zuvor beschrieben, umfassen.

Falls das Laminat aus mehreren Trägern gebildet wird, können sich die textilen Flächen an einer oder beiden Laminatoberflächen, zwischen den Trägern oder sowohl an den Oberflächen als auch im Innern des Laminats zwischen den Trägern befinden.

Insofern der erfindungsgemäße Verbundwerkstoff noch eine oder mehrere zusätzliche Elastomerschichten aufweist, sind diese - wie bereits zuvor beschrieben - entsprechend ausgestaltet.

Weiterer Gegenstand der vorliegenden Erfindung ist somit ein Verbundwerkstoff umfassend:

a) mindestens zwei Träger,

b) mindestens ein zwischen den Trägern befindliches und/oder auf mindestens einer der äußeren Oberflächen des Trägers befindliches textiles Flächengebilde, welches mindestens einen endverfestigten B-Stage Binder aufweist,

c) optional mindestens ein auf die Oberseite des mit dem B-Stage-Binder ausgerüsteten textilen Flächengebildes aufgebrachtes oder in das textile Flächengebilde eingebrachtes Funktionsmaterial,

d) gegebenenfalls weitere Schichten,

dadurch gekennzeichnet, dass

e) das mit B-Stage Binder endverfestigte textile Flächengebilde Hohlräume aufweist, die einem Porenvolumen im Bereich von mehr als 20% entsprechen.

Die bei Schritt iv) und d) optional aufgebrachten zusätzlichen Schichten sind insbesondere dekorative Schichten, Laminate, z. B. CPL oder HPL, Dekorpapiere oder auch Lack-und Schutzschichten, etc. Diese Zusatzschichten, deren Aufbringen und Bearbeitung bzw. Verarbeitung unterliegen keinen Einschränkungen und sind dem Fachmann bekannt.

Selbstverständlich können diese Zusatzschichten ihrerseits ein mit einem B-Stage-Binder versehenes textiles Flächengebilde enthalten. Beispielsweise können B-Stage-Binder enthaltende Dekorschichten, CPL, HPL oder andere Zusatzschichten auf den Träger aufgebracht und auflaminiert werden.

Insofern der erfindungsgemäße Verbundwerkstoff noch eine oder mehrere zusätzliche Elastomerschichten aufweist, sind diese - wie bereits zuvor beschrieben - entsprechend ausgestaltet.

Die Erfindung umfasst somit auch Laminate, die das erfindungsgemäße textile Flächengebilde, d.h. ein mit einem B-Stage Binder endverfestigtes textiles Flächengebilde mit Hohlräumen, die einem Porenvolumen im Bereich von mehr als 20% entsprechen, aufweisen und die als dekorative Zusatzschichten auf einen Träger aufgebracht werden. Hierbei sind insbesondere Dekorschichten, CPL, HPL oder ähnliche Laminate zu erwähnen, die je nach Anwendung ausgewählt und mittels eines Klebstoffes auf den Träger auflaminiert werden.

Derartige Laminate sind im Grundsatz bekannt. Laminate, die ein textiles Flächengebilde enthalten, sind ausführlich in der WO08/101679 und WO08/101678 beschrieben, auf die hiermit verwiesen wird und die Bestandteil dieser Beschreibung sind.

CPL oder HPL bestehen mehreren unterschiedlichen Schichten, nämlich zumeist aus Kraft-Papieren, Dekor-Papieren und Overlaypapieren. Durch die Verwendung von textilen Flächengebilden kann der Aufbau, wie in der WO08/101679 und WO08/101678 beschrieben, vereinfacht werden und das Laminat in den mechanischen Eigenschaften und den Brandeigenschaften verbessert werden. Der Einsatz des erfindungsgemäßen textilen Flächengebildes in diesen Laminaten führt zusätzlich zu einem erheblich verbesserten akustischen Dämpfungsverhalten und verbesserter Schallabstrahlcharakteristik (Frequenzverlauf), die sich insbesondere hinsichtlich Trittschall im Fußbodenbereich bemerkbar machen.

Weiterer Gegenstand der Erfindung ist somit ein Laminat, insbesondere eine Dekorschicht, ein HPL oder CPL, umfassend mindestens ein textiles Flächengebilde, dadurch gekennzeichnet, dass das mit B-Stage Binder endverfestigte textile Flächengebilde Hohlräume aufweist, die einem Porenvolumen im Bereich von mehr als 20% entsprechen.

Eine weitere Ausführungsform umfasst auch solche Laminate, insbesondere CPL oder HPL, welche eine oder mehrere Korkschichten, wie zuvor beschrieben, aufweisen. Weiterer Gegenstand der Erfindung ist somit ein Laminat, insbesondere ein HPL oder CPL, umfassend mindestens ein textiles Flächengebilde und eine Korkschicht, dadurch gekennzeichnet, dass das mit B-Stage Binder endverfestigte textile Flächengebilde Hohlräume aufweist, die einem Porenvolumen im Bereich von mehr als 20% entsprechen, und das Laminat mittels eines Klebstoffes auf den Träger auflaminiert wird.

Weiterer Gegenstand der Erfindung ist ein Verbundwerkstoff, der mindestens ein erfindungsgemäßes Laminat, vorzugsweise eine erfindungsgemäße Dekorschicht, ein HPL oder CPL umfasst.

Das Aufbringen des Laminats erfolgt mittels bekannter Verfahren unter Druck und Temperatur mit Hilfe von bekannten Klebstoffen. Alternativ kann das Laminat auch mit Hilfe einer zusätzlichen textilen Fläche, die zwischen Laminat und Träger angeordnet ist und die einen B-Stage-Binder enthält, erfolgen. Der B-Stage Binder härtet während des Pressvorgangs aus und bewirkt die dauerhafte Verklebung des Laminats auf den Träger.

Der erfindungsgemäße Verbundwerkstoff und das Laminat weisen hervorragende schalldämmende und schalldämpfende Eigenschaften auf. Aufgrund der inneren Struktur des textilen Flächengebildes im Verbundwerkstoff bzw. Laminate kommt es zu einer Reduktion der Schallausbreitung senkrecht und waagerecht zum eingebrachten textilen Flächengebilde. Damit ist eine hervorragende Schalldämmung z. B. zur Bodenbelagsunterseite gegeben. Gleichzeitig reduziert die spezielle Struktur der textilen Fläche die Schallleitung längs der textilen Fläche und verändert insbesondere die Geräuschfarbe, d. h. das Frequenzmuster des Schalles. Dieser positive Effekt kommt ganz besonders bei der Verringerung bzw. Vermeidung des Trittschalls zum Tragen.

Durch Verwendung der erfindungsgemäßen textilen Fläche sowie von geeigneten Zusatzschichten erhält der Verbundwerkstoff - wie oben beschrieben - zusätzliche, für die Anwendung wichtige Zusatzeigenschaften. Beispielsweise lässt sich ein verbessertes Impaktverhalten der Verbundwerkstoffe erreichen. Die Herstellung von dekorativen Oberflächen ist möglich, die insbesondere für Fußböden oder für Möbelelemente von großer Bedeutung ist.

Durch Verwendung der erfindungsgemäßen textilen Fläche, insbesondere in Kombination mit der/den vorstehend beschriebenen Elastomerschicht(en), wird einerseits das Impaktverhalten verbessert und zugleich eine weitere Reduktion des Trittschalls erreicht.

Ein weiterer Gegenstand der Erfindung ist somit die Verwendung der erfindungsgemäßen Verbundwerkstoffen und Laminate als Fußbodenbelag oder Teil eines Fußbodenbelages. Daneben können die Werkstoffe und Laminate auch als Raum- oder Wandelemente oder Teile davon eingesetzt werden oder in der Möbelindustrie Verwendung finden.

Die folgenden Beispiele zeigen die besonderen akustischen Eigenschaften des erfindungsgemäßen Verbundwerkstoffes in beeindruckender Weise ohne diese jedoch zu beschränken.

**Patentansprüche**

1. Verbundwerkstoff umfassend:

    (i) mindestens ein Trägermaterial und
    (ii) mindestens ein textiles Flächengebilde, wobei das textile Flächengebilde mindestens einen endverfestigten B-Stage Binder aufweist, **dadurch gekennzeichnet, dass**
    (iii) das mit B-Stage Binder endverfestigte textile Flächengebilde Hohlräume aufweist, die einem Porenvolumen im Bereich von mehr als 20% entsprechen.

2. Verbundwerkstoff gemäß Anspruch 1, **dadurch gekennzeichnet, dass** das im Verbundwerkstoff vorliegende textile Flächengebilde bis zu 35 Gew.-%, vorzugsweise zwischen 15 Gew.-% und 20 Gew.-%, an endverfestigtem B-Stage Binder aufweist (jeweils bezogen auf das textile Flächengebilde ohne Funktionsmaterialien).

3. Verbundwerkstoff gemäß Anspruch 1, **dadurch gekennzeichnet, dass** das im Verbundwerkstoff vorliegende textile Flächengebilde mindestens einen akustisch wirksamen Füllstoff aufweist welcher das Porenvolumen füllt, und die Menge an endverfestigtem B-Stage Binder zwischen 60 Gew.-% und 80 Gew.-% beträgt.

4. Verbundwerkstoff gemäß Anspruch 1, **dadurch gekennzeichnet, dass** das textile Flächengebilde sich im Innern, an mindestens einer der Oberfläche des Trägermaterials und/oder zwischen einzelnen Lagen des Trägermaterials befindet.

5. Verbundwerkstoff gemäß Anspruch 1, **dadurch gekennzeichnet, dass** es sich bei dem Trägermaterial um auf Holz basierende Materialien, vorzugsweise um Sperr- bzw. Lagenholz, Holzspanwerkstoff, insbesondere Spanplatten und OSB (Oriented Strand Boards), Holzfaserwerkstoff, insbesondere poröse Holzfaserplatten, diffusionsoffene Holzfaserplatten, harte (hochdichte) Holzfaserplatten (HDF) und mitteldichte Holzfaserplatten (MDF), und Arboform, handelt.

6. Verbundwerkstoff gemäß Anspruch 1, **dadurch gekennzeichnet, dass** es sich bei dem textilen Flächengebilde um ein Nonwoven umfassend Naturfasern und/oder Fasern aus synthetisierten oder natürlichen Polymeren, keramische Fasern, Mineralfasern oder Glasfasern, wobei diese auch in Form von Gemischen verwendet werden können, handelt.

7. Verbundwerkstoff gemäß Anspruch 6, **dadurch gekennzeichnet, dass** es sich bei dem textilen Flächengebilde um ein Nonwoven aus Glasfasern dessen Flächengewicht vorzugsweise zwischen 15 und 500 g/m$^2$ beträgt, ein Nonwoven aus Mineralfasern dessen Flächengewicht vorzugsweise zwischen 15 und 500 g/m$^2$ beträgt, ein Nonwoven aus Polyesterfasern dessen Flächengewicht vorzugsweise zwischen 10 und 500 g/m$^2$ beträgt oder Cellulosefasern, handelt, und die Fasern in den Nonwoven als Filamente und/oder Stapelfasern vorliegen.

8. Verbundwerkstoff gemäß Anspruch 1, **dadurch gekennzeichnet, dass** es sich bei dem B-Stage Binder um einen formaldehydfreien Binder oder einen Binder handelt, die jeweils einer mehrstufigen Härtung unterworfen werden, vorzugsweise auf Basis von Furfurylalkohol-Formaldehyd, Phenol-Formaldehyd, Melamin-Formaldehyd, Harnstoff-Formaldehyd und deren Gemische, wobei die wässrigen Systeme besonders bevorzugt sind.

9. Verbundwerkstoff gemäß Anspruch 1, **dadurch gekennzeichnet, dass** das gemäß (ii) eingesetzte textile Flächengebilde noch zusätzliche Funktionsmaterialien aufweist, vorzugsweise Flammschutzmittel und/oder Materialien zur Abschirmung von elektromagnetischen Strahlen.

10. Verbundwerkstoff gemäß Anspruch 1, **dadurch gekennzeichnet, dass** das textile Flächengebilde, welches mindestens einen endverfestigten B-Stage Binder aufweist, in den Träger eingebracht und/oder auf den Träger aufgebracht ist.

11. Verbundwerkstoff gemäß einem oder mehreren der Ansprüche 1 bis 10, **dadurch gekennzeichnet, dass** auf die Oberseite des mit dem B-Stage-Binder ausgerüsteten textilen Flächengebildes ein Funktionsmaterial aufgebracht oder in das textile Flächengebilde eingebracht ist.

12. Verbundwerkstoff gemäß einem oder mehreren der Ansprüche 1 bis 11, **dadurch gekennzeichnet, dass** dieser zusätzlich eine oder mehrere Schichten aus einem Kork und/oder Korkwerkstoff aufweist, wobei die Dicke der jeweiligen zusätzlichen Korkschicht vorzugsweise zwischen 0,1 mm und 3 mm beträgt

13. Verbundwerkstoff gemäß einem oder mehreren der Ansprüche 1 bis 12, **dadurch gekennzeichnet, dass** mindestens zwei Träger vorliegen und zwischen den Trägern und/oder an den Oberflächen der Träger jeweils textile Flächen gemäß (iii) vorliegen.

14. Verbundwerkstoff gemäß einem oder mehreren der Ansprüche 1 bis 13, **dadurch gekennzeichnet, dass** es sich bei den weiteren Schichten vorzugsweise um dekorative Schichten, CP-Laminate (CPL), HP- Laminate (HPL), Dekorpapiere und/oder Lack-und Schutzschichten handelt.

15. Verbundwerkstoff gemäß einem oder mehreren der Ansprüche 1 bis 14, **dadurch gekennzeichnet, dass** die spezifische Dichte (in g/cm$^3$) des Porenvolumens von der spezifischen Dichte des B-Stage Binders und den Fasern des textilen Flächengebildes unterschiedlich ist.

16. Verbundwerkstoff gemäß einem oder mehreren der Ansprüche 3 bis 15, **dadurch gekennzeichnet, dass** der akustisch wirksame Füllstoff aus Glashohlkugeln, Hohlfasern, Glaspartikel, Korkpartikel, poröse Füllstoffe, Partikel aus Elastomeren, Kork, Polystyrolpartikel, PU-Partikel und Schäumen gebildet wird.

17. Verbundwerkstoff gemäß einem oder mehreren der Ansprüche 3 bis 16, **dadurch gekennzeichnet, dass** die spezifische Dichte (in g/cm$^3$) des akustischen wirksamen Füllstoffs von der spezifischen Dichte des B-Stage Binders und den Fasern des textilen Flächengebildes unterschiedlich ist.

18. Verbundwerkstoff gemäß einem oder mehreren der Ansprüche 1 bis 17, **dadurch gekennzeichnet, dass** dieser mindestens eine zusätzliche Elastomerschicht aufweist.

19. Verfahren zur Herstellung eines Verbundwerkstoffes gemäß Anspruch 1, umfassend die Maßnahmen:

   a) Zuführen von Trägermaterial,
   b) Zuführen mindestens eines textilen Flächengebildes, wobei das textile Flächengebilde mindestens einen Binder im B-Stage-Zustand aufweist und welches optional mindestens ein Funktionsmaterial aufweist,
   c) Laminieren des gemäß Schritt a) und b) erhaltenen Aufbaus unter Einwirkung von Druck und Wärme, sodass der im B-Stage-Zustand vorliegende Binder in dem textilen Flächengebilde endverfestigt wird,
   d) ggf. Aufbringen weiterer Schichten auf das Laminat und ggf. Trocknung,

   **dadurch gekennzeichnet, dass** das in b) zugeführte textile Flächengebilde ein Porenvolumen von mehr als 20% aufweist, die Laminierung in (c) so durchgeführt wird, dass das mit B-Stage Binder endverfestigte textile Flächengebilde im resultierenden Verbundwerkstoff ein Porenvolumen im Bereich von mehr als 20% aufweist.

20. Verfahren gemäß Anspruch 19, **dadurch gekennzeichnet, dass** - insofern keine akustisch wirksamen Additive zugesetzt werden - die Menge an B-Stage Binder in b) maximal 35 Gew-%, vorzugsweise 15 Gew% bis 20 Gew%, (jeweils bezogen auf das vorverfestigte textile Flächengebilde ohne Funktionsmaterialien) beträgt.

21. Verfahren gemäß Anspruch 19, **dadurch gekennzeichnet, dass** - insofern akustisch wirksame Additive zugesetzt werden - die Menge an B-Stage Binder in b) mehr als 35 Gew.-%, bevorzugt 60 Gew.-% bis 80 Gew.-% (jeweils bezogen auf das vorverfestigte textile Flächengebilde ohne Funktionsmaterialien) beträgt.

22. Verfahren gemäß Anspruch 19, **dadurch gekennzeichnet, dass** die Laminierung mittels dis-kontinuierlichem oder kontinuierlichem Pressen oder durch Walzen erfolgt.

23. Verfahren gemäß Anspruch 19, **dadurch gekennzeichnet, dass** das Aufbringen eines textilen Flächengebildes gemäß Schritt b) auch während der Herstellung des Trägers erfolgen kann.

24. Dekorschicht, vorzugsweise ein CP-Laminate (CPL) und/oder HP- Laminate (HPL), umfassend mindestens ein textiles Flächengebilde, **dadurch gekennzeichnet, dass** das mit B-Stage Binder endverfestigte textile Flächengebilde Hohlräume aufweist, die einem Porenvolumen im Bereich von mehr als 20% entsprechen.

25. Dekorschicht gemäß Anspruch 24, **dadurch gekennzeichnet, dass** diese zusätzlich eine oder mehrere Schichten aus einem Kork und/oder Korkwerkstoff aufweist, wobei die Dicke der jeweiligen zusätzlichen Korkschicht vorzugsweise zwischen 0,1mm und 3mm beträgt.

26. Fußbodenbelag oder Teil eines Fußbodenbelages umfassend einen Verbundwerkstoff gemäß einem oder mehreren der Ansprüche 1 bis 18.

**Europäisches Patentamt**

**European Patent Office**

**Office européen des brevets**

**EUROPÄISCHER RECHERCHENBERICHT**

Nummer der Anmeldung

EP 11 00 2801

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,P | EP 2 208 836 A1 (JOHNS MANVILLE EUROPE GMBH [DE]) 21. Juli 2010 (2010-07-21) | 1,2, 4-11, 13-15, 19-24,26 | INV. B32B21/10 E04F15/10 |
| A,P | * Absätze [0014] - [0017], [0019] - [0038], [0040] - [0052], [0055] - [0057], [0059], [0060], [0066] * ----- | 3,12,16, 25 | |
| X,D | WO 2008/101679 A2 (JOHNS MANVILLE EUROPE GMBH [DE]; KETZER MICHAEL [DE]; GLEICH KLAUS FRI) 28. August 2008 (2008-08-28) | 1,2, 4-11, 13-15, 19-24,26 | |
| A | * Seite 2, Zeile 1 - Zeile 17; Ansprüche 1-46 * <br> * Seite 3, Zeile 20 - Seite 4, Zeile 7 * <br> * Seite 4, Zeile 21 - Zeile 22 * <br> * Seite 4, Zeile 27 - Seite 13, Zeile 19 * <br> * Seite 16, Zeile 31 - Zeile 33 * ----- | 3,12,16, 25 | |
| A | DE 202 14 532 U1 (HW IND GMBH & CO KG [DE]) 19. Februar 2004 (2004-02-19) * Absätze [0002] - [0010], [0012], [0015]; Ansprüche 1-16; Abbildungen 1-5 * ----- | 1-26 | **RECHERCHIERTE SACHGEBIETE (IPC)** <br><br> B32B <br> E04F |
| A | US 2006/072372 A1 (THOMAS GERALD B [US] ET AL) 6. April 2006 (2006-04-06) * Absätze [0001] - [0016]; Ansprüche 1-10 * ----- <br><br> -/-- | 1-26 | |

Der vorliegende Recherchenbericht wurde für alle Patentansprüche erstellt

| Recherchenort | Abschlußdatum der Recherche | Prüfer |
|---|---|---|
| München | 29. August 2011 | Okunowski, Joachim |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...................................................................
& : Mitglied der gleichen Patentfamilie, übereinstimmendes Dokument

EPO FORM 1503 03.82 (P04C03)

Europäisches
Patentamt
European
Patent Office
Office européen
des brevets

**EUROPÄISCHER RECHERCHENBERICHT**

Nummer der Anmeldung

EP 11 00 2801

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | N. Aisenbrey, L. Frormann, W. Maysenhölder: "Naturfaserverstärkte Kunststoffe als akustisch wirksame Bauelemente" In: W. Krenkel: "Verbundwerkstoffe: 17. Symposium Verbundwerkstoffe und Werkstoffverbunde", 14. Mai 2009 (2009-05-14), Wiley-VCH Verlag GmbH & Co., Weinheim, XP000002657519, ISBN: 9783527326150 Seiten 401-406, * DOI: 10.1002/9783527627110.ch56 * ----- | 1-26 | |
| A | US 2004/206036 A1 (PERVAN DARKO [SE]) 21. Oktober 2004 (2004-10-21) * Absätze [0014], [0018]; Ansprüche 1-13 * ----- | 1-26 | |
| A | F HERNÁNDEZ-OLIVARES: "Development of cork-gypsum composites for building applications", CONSTRUCTION AND BUILDING MATERIALS, Bd. 13, Nr. 4, 1. Juni 1999 (1999-06-01), Seiten 179-186, XP55005552, ISSN: 0950-0618, DOI: 10.1016/S0950-0618(99)00021-5 * das ganze Dokument * ----- | 1-26 | RECHERCHIERTE SACHGEBIETE (IPC) |
| A | HONG ET AL: "Sound absorption behavior of multiporous hollow polymer micro-spheres", MATERIALS LETTERS, NORTH HOLLAND PUBLISHING COMPANY. AMSTERDAM, NL, Bd. 60, Nr. 29-30, 29. Oktober 2006 (2006-10-29), Seiten 3451-3456, XP005838673, ISSN: 0167-577X, DOI: 10.1016/J.MATLET.2006.03.030 * das ganze Dokument * ----- | 1-26 | |

Der vorliegende Recherchenbericht wurde für alle Patentansprüche erstellt

| Recherchenort | Abschlußdatum der Recherche | Prüfer |
|---|---|---|
| München | 29. August 2011 | Okunowski, Joachim |

KATEGORIE DER GENANNTEN DOKUMENTE

X : von besonderer Bedeutung allein betrachtet
Y : von besonderer Bedeutung in Verbindung mit einer
      anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
      nach dem Anmeldedatum veröffentlicht worden ist
D : in der Anmeldung angeführtes Dokument
L : aus anderen Gründen angeführtes Dokument

....................................................................................

& : Mitglied der gleichen Patentfamilie, übereinstimmendes
      Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 00 2801

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-08-2011

| Im Recherchenbericht angeführtes Patentdokument | | Datum der Veröffentlichung | Mitglied(er) der Patentfamilie | | Datum der Veröffentlichung |
|---|---|---|---|---|---|
| EP 2208836 | A1 | 21-07-2010 | DE 102009004573 | A1 | 15-07-2010 |
| WO 2008101679 | A2 | 28-08-2008 | CA 2678979 | A1 | 28-08-2008 |
| | | | CA 2678981 | A1 | 28-08-2008 |
| | | | EP 2112972 | A2 | 04-11-2009 |
| | | | EP 2112973 | A2 | 04-11-2009 |
| | | | WO 2008101678 | A2 | 28-08-2008 |
| | | | US 2010221973 | A1 | 02-09-2010 |
| | | | US 2010167005 | A1 | 01-07-2010 |
| DE 20214532 | U1 | 19-02-2004 | KEINE | | |
| US 2006072372 | A1 | 06-04-2006 | KEINE | | |
| US 2004206036 | A1 | 21-10-2004 | US 2008000188 | A1 | 03-01-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006031522 A
- US 5837620 A
- US 6303207 A
- US 6331339 A
- WO 08101678 A
- WO 2008101679 A2
- WO 08101679 A

**In der Beschreibung aufgeführte Nicht-Patentliteratur**

- Chemielexikon. **RÖMPP.** Elastomere. 1105-1107
- Chemielexikon. **RÖMPP.** Elastomere. 1106-1107